Europäisches Patentamt

European Patent Office

Office européen des brevets

(19)

(11) **EP 1 034 145 B1**

(12) **FASCICULE DE BREVET EUROPEEN**

(45) Date de publication et mention
de la délivrance du brevet:
**07.08.2002   Bulletin 2002/32**

(21) Numéro de dépôt: **98956975.1**

(22) Date de dépôt: **27.11.1998**

(51) Int Cl.[7]: **C03C 3/32**

(86) Numéro de dépôt international:
**PCT/FR98/02556**

(87) Numéro de publication internationale:
**WO 99/28256 (10.06.1999 Gazette 1999/23)**

(54) **VERRES A BASE DE CHALCOGENURES, LEUR PREPARATION ET LEUR APPLICATION**

CHALCOGENIDGLÄSER ,DEREN HERSTELLUNG UND DEREN VERWENDUNG

GLASSES BASED ON CHALCOGENIDES, PREPARATION AND APPLICATION

(84) Etats contractants désignés:
**AT BE CH CY DE DK ES FI FR GB GR IE IT LI LU
MC NL PT SE**

(30) Priorité: **27.11.1997  FR 9714942**

(43) Date de publication de la demande:
**13.09.2000   Bulletin 2000/37**

(73) Titulaire: **Umicore IR Glass
35690 Acigne (FR)**

(72) Inventeurs:
• **GUIMOND, Yann
F-35000 Rennes (FR)**
• **MA, Hong, Li
F-35700 Rennes (FR)**
• **ZHANG, Xiang, Hua
F-35700 Rennes (FR)**

• **LUCAS, Jacques
F-35830 Betton (FR)**

(74) Mandataire: **Tonnellier, Jean-Claude
Nony & Associés,
3, rue de Penthièvre
75008 Paris (FR)**

(56) Documents cités:
**EP-A- 0 775 674          EP-A- 0 775 675
US-A- 5 389 584**

• **AITKEN B G ET AL: "RARE-EARTH-DOPED
MULTICOMPONENT GE-BASED SULPHIDE
GLASSES" JOURNAL OF NON-CRYSTALLINE
SOLIDS, vol. 213/214, 15 juin 1997, pages
281-287, XP000692026**

EP 1 034 145 B1

## Description

L'invention a pour objet de nouveaux verres à base de chalcogénures, leur préparation et leur application notamment dans le domaine de la transmission des rayonnements infrarouges.

On connaissait déjà des systèmes ternaires Ga-Ge-S et Ge-Sb-S ; voir par exemple M. XILAI et al., Proceedings of the XIVth International Congress on glass, New Delhi (1986), p. 118 ; D. Linke et I. Böckel, Z. Anorg. Allg. Chem. 419:97 (1976). Ces systèmes ternaires donnent des verres de stabilité thermique moyenne.

L'invention, qui porte sur la réalisation de verres basés sur des systèmes quaternaires Ga-Ge-Sb-S (ou Se), permet d'obtenir des verres ayant une plus grande stabilité, avec des propriétés thermiques améliorées et notamment une bonne résistance à la dévitrification. Il est ainsi possible d'obtenir des verres sous la forme de barreaux massifs ayant plus de 50 mm de diamètre et plusieurs centimètres de hauteur. Ces verres sont peu coûteux, et présentent de bonnes propriétés thermomécaniques. En particulier, ils sont moulables.

L'invention a donc pour objet une composition vitreuse à base de chalcogénures contenant, en % molaires :

| | |
|---|---|
| Ga (+ éventuellement In) | m |
| Ge | n |
| Sb (+ éventuellement As) | p |
| S | $z_1$ |
| Se | $z_2$ |
| Te | $z_3$ |
| MX | r |
| Ln | s |
| Adjuvants | t |

dans laquelle :

M représente au moins un métal alcalin choisi parmi Rb et Cs,

Ln représente une terre rare,

X représente au moins un halogène,

les adjuvants sont des additifs constitués par des métaux ou des sels métalliques,

m est un nombre pouvant varier de 1 à 15,

n est un nombre pouvant varier de 5 à 35,

p est un nombre pouvant varier de x à 25,

$z_1$, $z_2$ et $z_3$ sont des nombres pouvant être nuls, tels que la somme $(z_1+z_2+z_3)$ peut varier de 45 à 80,

l'un au moins des nombres $z_1$ et $z_2$ n'est pas nul,

r est un nombre pouvant être nul et au plus égal à 20,

s est un nombre pouvant être nul et au plus égal à 5,

t est un nombre pouvant être nul, et au plus égal à 5, représentant le pourcentage molaire des métaux ou des sels métalliques présents dans lesdits adjuvants,

si $z_1 > z_2$, alors x = 5 et $\frac{(z_2+z_3)}{(z_1+z_2+z_3)} < 0,2$,

si $z_2 > z_1$, alors x = 3 et $\frac{(z_1+z_3)}{(z_1+z_2+z_3)} < 0,2$,

$z_3$ représente zéro ou un nombre tel que $\frac{z_3}{(z_1+z_2)} < 0,2$,

et la somme $(m+n+p+z_1+z_2+z_3+r+s+t)$ est égale à 100.

Dans les verres de l'invention, les métaux sont principalement sous forme de sels (essentiellement sulfures et séléniures, et éventuellement halogénures dans le cas où les adjuvants en contiennent et/ou dans le cas où r est différent de zéro).

On sait que les verres contiennent souvent des adjuvants qui peuvent être très divers. Tout élément chimique (à l'exception bien entendu des éléments expressément mentionnés ci-dessus comme constituants), notamment tout métal (y compris sous forme de sel) est susceptible de constituer un adjuvant utilisable dans les verres de l'invention. Le choix d'éventuels adjuvants peut être effectué par de simples expériences de routine. Parmi les adjuvants, on peut citer notamment K, Ba, Ca, Sr, Bi, Zn et Mo, notamment sous forme de sels, en particulier sous forme d'halogénures.

Les terres rares (Ln) sont notamment celles qui présentent des propriétés de fluorescence, et en particulier Dy, Er, Nd, Pr, Yb, Tm et Ho.

Parmi les verres de l'invention, on citera notamment :

- lorsque In est présent, les verres pour lesquels le rapport molaire In/Ga+In est inférieur à 0,5, ou inférieur à 0,1 ;

- lorsque As est présent, les verres pour lesquels le rapport molaire As/Sb+As est inférieur à 0,5, ou inférieur à 0,1 ;

- lorsque Te est présent, les verres pour lesquels $z_3/z_1+z_2$ est inférieur à 0,1 ;

- les verres pour lesquels r est différent de zéro ;

- les verres pour lesquels r est au plus égal à 10 ;

- les verres pour lesquels t est inférieur à 3, ou égal à zéro.

Parmi les verres pour lesquels $z_1$ est plus grand que $z_2$, on citera en particulier ceux pour lesquels le rapport $(z_2+z_3) / (z_1+z_2+z_3)$ est inférieur à 0,1.

Les verres pour lesquels $z_1$ est plus grand que $z_2$ sont transparents dans l'infrarouge, y compris dans les fenêtres atmosphériques 3-5 µm et 8-12 µm, et aussi dans une partie du spectre visible pouvant aller, vers les courtes longueurs d'onde, jusqu'à des longueurs d'onde de l'ordre de 0,5 µm. On a découvert que l'addition de sels de rubidium et/ou de césium, éventuellement en mélange avec un sel de potassium, permet d'agrandir le domaine de transparence de ces verres dans le visible vers des longueurs d'ondes plus courtes, ce qui est particulièrement intéressant pour des systèmes optiques complexes utilisant à la fois l'infrarouge et la lumière visible.

Parmi les verres pour lesquels $z_1$ est supérieur à $z_2$, on citera encore :

- les verres pour lesquels $z_2$ et/ou $z_3$ sont égaux à zéro ;

- les verres tels que $z_1$ est un nombre pouvant varier de 50 à 75 environ ;

- les verres pour lesquels p est au moins égal à 7, ou au moins égal à 8, ou au moins égal à 10 ;

- les verres pour lesquels le nombre m est dans la gamme de 2 à 15, et en particulier de 3 à 15.

Les verres pour lesquels $z_2$ est supérieur à $z_1$ sont transparents dans l'infrarouge, y compris dans les fenêtres atmosphériques 3-5 µm et 8-12 µm, et éventuellement dans une partie du visible si des halogénures alcalins MX sont présents. Parmi ces verres, on citera notamment ceux pour lesquels $z_2$ est un nombre pouvant varier de 45 à 80, et ceux pour lesquels $(z_1+z_3)/(z_1+z_2+z_3)$ est inférieur à 0,2, ou inférieur à 0,1. On citera également ceux pour lesquels l'un au moins des nombres $z_1$ et $z_3$ est égal à zéro.

Parmi les verres de l'invention on citera également ceux qui sont exempts d'indium et/ou exempts d'arsenic.

L'invention concerne également un procédé de préparation des verres définis ci-dessus, ce procédé comprenant principalement les étapes consistant : (i) à mélanger les éléments constitutifs Ga, Ge, Sb, S et/ou Se et/ou Te et éventuellement In et As, les adjuvants, les sels de terres rares et les halogénures alcalins, (ii) à chauffer le mélange en tube scellé sous vide, à une température et pendant un temps suffisants pour obtenir un mélange homogène, puis (iii) à refroidir le mélange homogène ainsi obtenu.

Les verres de l'invention peuvent notamment être préparés de la manière indiquée ci-après. On opère dans des conteneurs en matériau chimiquement inerte, par exemple un tube de silice, dans lequel on introduit, dans les proportions souhaitées, les constituants métalliques présents dans le verre, sous forme de métaux, ainsi que le soufre et/ou le sélénium et/ou le tellure. On peut aussi introduire les constituants métalliques, ou une partie d'entre eux, sous forme de sels (principalement sulfures et/ou séléniures, et éventuellement tellurures). Les adjuvants peuvent être ajoutés sous la forme de métaux ou de sels métalliques (halogénures ou éventuellement chalcogénures). Les métaux alcalins Rb et Cs, s'ils sont présents, sont généralement ajoutés sous forme d'halogénures (notamment chlorure, bromure ou iodure). Les lanthanides sont ajoutés généralement sous forme de sels (notamment chalcogénures). Les ingrédients sont ajoutés de préférence sous la forme d'un mélange de morceaux ou de poudres. On évacue l'air en établissant le vide dans le tube, puis on scelle le tube, et on le chauffe lentement. La vitesse de montée en température et la température finale de l'étape de chauffage peuvent être déterminées dans chaque cas par des expériences de routine. La vitesse de montée en température est suffisamment lente, par exemple de 60 à 100°C par heure environ, pour que la pression de vapeur des éléments n'ayant pas encore réagi n'augmente pas de façon trop importante, afin d'éviter des risques d'explosion du tube. La température atteinte à la fin de l'étape de chauffage est une température suffisante pour que le produit final soit liquide et homogène. On peut déterminer préalablement par des expériences de routine cette température, en étudiant des échantillons de verre obtenus après chauffage à diverses températures, et en vérifiant si les verres obtenus sont homogènes ou non. L'homogénéité du verre peut être vérifiée par ombroscopie.

EP 1 034 145 B1

L'ombroscopie est une méthode consistant à examiner l'ombre, projetée sur un écran, d'un échantillon poli placé entre cet écran et une source lumineuse ponctuelle.

La température finale atteinte lors de l'étape de chauffage est généralement de l'ordre de 800 à 1000°C environ.

On maintient le tube pendant 2 ou 3 heures à cette température finale, puis on le laisse refroidir à température ambiante. On soumet ensuite le tube contenant la composition vitreuse à un recuit à une température voisine de la température de transition vitreuse, celle-ci ayant été déterminée préalablement.

Par exemple, on effectue un recuit à 10° en-dessous de la température de transition vitreuse, pendant quelques heures, généralement de 5 à 10 heures environ. On laisse ensuite refroidir, puis on casse le tube de silice pour extraire le barreau de verre obtenu.

Si on veut obtenir des fibres, on porte ensuite le barreau à une température supérieure à la température de transition vitreuse et on prépare des fibres par étirage, de façon connue en soi.

Si on veut préparer des lentilles optiques, on découpe le barreau de verre en disques que l'on chauffe jusqu'à une température supérieure à la température de transition vitreuse, et que l'on moule sous forme de lentilles à la température ainsi atteinte.

Les compositions vitreuses de l'invention peuvent être utilisées notamment sous la forme de lentilles optiques utilisables dans les caméras infrarouges, notamment pour des applications en vision ou détection nocturne.

Elles sont utilisables également en optique passive, en tant que verres multispectraux, par exemple sous forme de fenêtres ou hublots laissant passer des longueurs d'onde du visible et/ou de l'infrarouge jusqu'à des longueurs d'onde pouvant atteindre 14 µm, selon les compositions.

Les compositions vitreuses de l'invention sont en outre étirables sous forme de fibres qui peuvent être utilisées en optique active. Elles permettent, notamment lorsqu'elles sont dopées par des lanthanides, de réaliser des barreaux lasers, ou encore de fournir des fibres optiques utilisables pour l'amplification optique, par exemple aux longueurs d'ondes 1,3 µm ou 1,55 µm.

**EXEMPLES**

*Exemples 1 à 25*

En opérant comme indiqué ci-dessus, on prépare des verres ayant les compositions suivantes (en % molaires).

| Exemples | Ga | Ge | Sb | S |
|---|---|---|---|---|
| 1 | 5 | 20 | 5 | 70 |
| 2 | 10 | 15 | 5 | 70 |
| 3 | 10 | 20 | 5 | 65 |
| 4 | 5 | 25 | 8 | 62 |
| 5 | 3 | 20 | 10 | 67 |
| 6 | 5 | 20 | 10 | 65 |
| 7 | 5 | 30 | 10 | 55 |
| 8 | 5 | 10 | 10 | 75 |
| 9 | 5 | 15 | 10 | 70 |
| 10 | 5 | 35 | 10 | 50 |
| 11 | 9 | 16 | 10 | 65 |
| 12 | 10 | 10 | 10 | 70 |
| 13 | 10 | 20 | 10 | 60 |

| Exemples | Ga | Ge | Sb | S |
|---|---|---|---|---|
| 14 | 10 | 30 | 10 | 50 |
| 15 | 15 | 10 | 10 | 65 |
| 16 | 15 | 20 | 10 | 55 |
| 17 | 15 | 5 | 10 | 70 |
| 18 | 5 | 10 | 20 | 65 |
| 19 | 5 | 15 | 20 | 60 |
| 20 | 5 | 20 | 20 | 55 |
| 21 | 5 | 23 | 17 | 55 |
| 22 | 10 | 10 | 20 | 60 |
| 23 | 10 | 20 | 20 | 50 |
| 24 | 10 | 15 | 20 | 55 |
| 25 | 5 | 15 | 25 | 55 |

4

*Exemples 26 à 72*

De façon analogue, avec les éléments Ga, Ge, Sb et Se, on prépare des verres ayant les compositions suivantes (en % molaires) :

| Exemples | Ga | Ge | Sb | Se |
|---|---|---|---|---|
| 26 | 3 | 20 | 12 | 65 |
| 27 | 5 | 35 | 5 | 55 |
| 28 | 5 | 30 | 5 | 60 |
| 29 | 5 | 25 | 5 | 65 |
| 30 | 5 | 15 | 5 | 75 |
| 31 | 5 | 10 | 5 | 80 |
| 32 | 5 | 5 | 15 | 75 |
| 33 | 5 | 5 | 25 | 65 |
| 34 | 5 | 5 | 30 | 60 |
| 35 | 5 | 15 | 10 | 70 |
| 36 | 5 | 20 | 25 | 50 |
| 37 | 5 | 30 | 15 | 50 |
| 38 | 5 | 10 | 10 | 75 |
| 39 | 5 | 10 | 20 | 65 |
| 40 | 5 | 10 | 25 | 60 |
| 41 | 5 | 20 | 20 | 55 |
| 42 | 5 | 30 | 10 | 55 |
| 43 | 5 | 5 | 30 | 60 |
| 44 | 5 | 23 | 10 | 62 |
| 45 | 5 | 20 | 10 | 65 |
| 46 | 5 | 25 | 10 | 60 |
| 47 | 5 | 15 | 20 | 60 |
| 48 | 5 | 30 | 10 | 55 |
| 49 | 7 | 25 | 3 | 65 |

| Exemples | Ga | Ge | Sb | Se |
|---|---|---|---|---|
| 50 | 10 | 25 | 5 | 60 |
| 51 | 10 | 15 | 5 | 70 |
| 52 | 10 | 10 | 10 | 70 |
| 53 | 10 | 10 | 20 | 60 |
| 54 | 10 | 15 | 20 | 55 |
| 55 | 10 | 15 | 15 | 60 |
| 56 | 10 | 15 | 25 | 50 |
| 57 | 10 | 25 | 20 | 45 |
| 58 | 10 | 35 | 10 | 45 |
| 59 | 7 | 28 | 10 | 55 |
| 60 | 10 | 20 | 10 | 60 |
| 61 | 10 | 10 | 10 | 70 |
| 62 | 10 | 30 | 15 | 45 |
| 63 | 10 | 35 | 5 | 50 |
| 64 | 12 | 25 | 3 | 60 |
| 65 | 12 | 30 | 3 | 55 |
| 66 | 12 | 20 | 3 | 65 |
| 67 | 15 | 25 | 5 | 55 |
| 68 | 15 | 20 | 5 | 60 |
| 69 | 15 | 15 | 10 | 60 |
| 70 | 15 | 15 | 15 | 55 |
| 71 | 15 | 20 | 15 | 50 |
| 72 | 15 | 25 | 10 | 50 |

*Exemples 73 à 83 :*

On prépare des verres ayant la composition suivante (en % molaires) :

| Exemple 73 | $Ga_1$ | $Ge_{21}$ | $Sb_{10}$ | $In_4$ | $S_{64}$ |
|---|---|---|---|---|---|
| Exemple 74 | $Ga_5$ | $Ge_{18}$ | $Sb_6$ | $As_5$ | $S_{66}$ |
| Exemple 75 | $Ga_4$ | $Ge_{17}$ | $Sb_{12}$ | $S_{63}$ | $(RbCl)_4$ |
| Exemple 76 | $Ga_{4,6}$ | $Ge_{18,6}$ | $Sb_{9,3}$ | $S_{60,5}$ | $(CsCl)_7$ |

(suite)

| Exemple 77 | $Ga_5$ | $Ge_{16}$ | $Sb_9$ | $S_{63}$ | $Se_7$ |
|---|---|---|---|---|---|
| Exemple 78 | $Ga_8$ | $Ge_{20}$ | $Sb_{10}$ | $S_{57}$ | $Te_5$ |
| Exemple 79 | $Ga_{10}$ | $Ge_{25}$ | $Sb_{15}$ | $Se_{45}$ | $S_5$ |
| Exemple 80 | $Ga_7$ | $Ge_{25}$ | $Sb_3$ | $Se_{60}$ | $Te_5$ |
| Exemple 81 | $Ga_5$ | $Ge_{19}$ | $Sb_{11}$ | $Nd_1$ | $S_{64}$ |
| Exemple 82 | $Ga_5$ | $Ge_{20}$ | $Sb_{10}$ | $Er_{0,5}$ | $S_{64,5}$ |
| Exemple 83 | $Ga_6$ | $Ge_{20}$ | $Sb_8$ | $Dy_1$ | $S_{65}$ |

## Revendications

1. Composition vitreuse à base de chalcogénures contenant, en % molaires :

| Ga (+ éventuellement In) | m |
|---|---|
| Ge | n |
| Sb (+ éventuellement As) | p |
| S | $z_1$ |
| Se | $z_2$ |
| Te | $z_3$ |
| MX | r |
| Ln | s |
| Adjuvants | t |

dans laquelle :

M représente au moins un métal alcalin choisi parmi Rb et Cs,
Ln représente une terre rare,
X représente au moins un halogène,
les adjuvants sont des additifs constitués par des métaux ou des sels métalliques,
m est un nombre pouvant varier de 1 à 15,
n est un nombre pouvant varier de 5 à 35,
p est un nombre pouvant varier de x à 25,
$z_1$, $z_2$ et $z_3$ sont des nombres pouvant être nuls, tels que la somme $(z_1+z_2+z_3)$ peut varier de 45 à 80,
l'un au moins des nombres $z_1$ et $z_2$ n'est pas nul,
r est un nombre pouvant être nul et au plus égal à 20,
s est un nombre pouvant être nul et au plus égal à 5,
t est un nombre pouvant être nul, et au plus égal à 5, représentant le pourcentage molaire des métaux ou des sels métalliques présents dans lesdits adjuvants,
si $z_1 > z_2$, alors x = 5 et $\frac{(z_2+z_3)}{(z_1+z_2+z_3)} < 0{,}2$,
si $z_2 > z_1$, alors, x = 3 et $\frac{(z_1+z_3)}{(z_1+z_2+z_3)} < 0{,}2$,
$z_3$ représente zéro ou un nombre tel que $\frac{z_3}{(z_1+z_2)} < 0{,}2$,

et la somme $(m+n+p+z_1+z_2+z_3+r+s+t)$ est égale à 100.

2. Composition vitreuse selon la revendication 1, dans laquelle les adjuvants comprennent au moins un métal choisi parmi K, Ba, Ca, Sr, Bi, Zn et Mo.

3. Composition vitreuse selon l'une quelconque des revendications précédentes, dans laquelle Ln est choisi parmi l'une au moins des terres rares suivantes : Dy, Er, Nd, Pr, Yb, Tm et Ho.

4. Composition vitreuse selon l'une quelconque des revendications précédentes, présentant l'une au moins des caractéristiques suivantes :

    - lorsque In est présent, le rapport molaire In/Ga+In est inférieur à 0,5, ou inférieur à 0,1 ;

- lorsque As est présent, le rapport molaire As/Sb+As est inférieur à 0,5, ou inférieur à 0,1 ;

- lorsque Te est présent, le rapport $z_3/z_1+z_2$ est inférieur à 0,1 ;

- r est différent de zéro ;

- r est au plus égal à 10 ;

- t est inférieur à 3 ;

- t est égal à zéro.

5.  Composition vitreuse selon l'une quelconque des revendications précédentes, dans laquelle $z_1$ est supérieur à $z_2$.

6.  Composition vitreuse selon la revendication 5, présentant l'une au moins des caractéristiques suivantes :

    - le rapport $\dfrac{(z_2+z_3)}{(z_1+z_2+z_3)}$ est inférieur à 0,1 ;
    - $z_3$ est égal à zéro ;
    - $z_2$ est égal à zéro ;
    - $z_1$ est un nombre pouvant varier de 50 à 75 ;
    - p est au moins égal à 7, ou au moins égal à 8, ou au moins égal à 10.

7.  Composition vitreuse selon l'une quelconque des revendications 1 à 4, dans laquelle $z_2$ est supérieur à $z_1$.

8.  Composition vitreuse selon la revendication 7, présentant l'une au moins des caractéristiques suivantes :

    - le rapport $\dfrac{(z_1+z_3)}{(z_1+z_2+z_3)}$ est inférieur à 0,1 ;
    - $z_3$ est égal à zéro ;
    - $z_1$ est égal à zéro ;
    - $z_2$ est un nombre pouvant varier de 45 à 80.

9.  Composition vitreuse selon l'une quelconque des revendications précédentes, qui est exempte d'indium et/ou exempte d'arsenic.

10. Composition vitreuse telle que définie dans l'une quelconque des revendications précédentes, dans laquelle ladite composition se présente sous la forme de fibre optique, de barreau laser, de lentille optique, ou de hublot ou fenêtre optique.

**Claims**

1.  Chalcogenide-based glass composition containing, in mol%:

| Ga (+ optionally In) | m |
|---|---|
| Ge | n |
| Sb (+ optionally As) | p |
| S | $z_1$ |
| Se | $z_2$ |
| Te | $z_3$ |
| MX | r |
| Ln | s |
| Additives | t |

in which:

M represents at least one alkali metal chosen from Rb and Cs,

Ln represents a rare earth,

X represents at least one halogen,

the additives are additives consisting of metals or metal salts,

m is a number which may vary from 1 to 15,

n is a number which may vary from 5 to 35,

p is a number which may vary from x to 25,

$z_1$, $z_2$ and $z_3$ are numbers, which may be zero, such that the sum $(z_1 + z_2 + z_3)$ may vary from 45 to 80,

at least one of the numbers $z_1$ and $z_2$ is not zero,

r is a number which may be zero and at most equal to 20,

s is a number which may be zero and at most equal to 5,

t is a number which may be zero, and at most equal to 5, representing the molar percentage of metals or metal salts present in the said additives,

if $z_1 > z_2$, then x = 5 and $\frac{(z_2 + z_3)}{(z_1 + z_2 + z_3)} < 0.2$,

if $z_2 > z_1$, then x = 3 and $\frac{(z_1 + z_3)}{(z_1 + z_2 + z_3)} < 0.2$,

$z_3$ represents zero or a number such that $\frac{z_3}{(z_1 + z_2)} < 0.2$ and

the sum $(m+n+p+z_1+z_2+z_3+r+s+t)$ is equal to 100.

2. Glass composition according to Claim 1, in which the additives comprise at least one metal chosen from K, Ba, Ca, Sr, Bi, Zn and Mo.

3. Glass composition according to either of the preceding claims, in which Ln is chosen from at least one of the following rare earths: Dy, Er, Nd, Pr, Yb, Tm and Ho.

4. Glass composition according to any one of the preceding claims, having at least one of the following features:

   - when In is present, the In/Ga+In molar ratio is less than 0.5 or less than 0.1;
   - when As is present, the As/Sb+As molar ratio is less than 0.5 or less than 0.1;
   - when Te is present, the $z_3/z_1+z_2$ ratio is less than 0.1;
   - r is different from zero;
   - r is at most equal to 10;
   - t is less than 3;
   - t is equal to zero.

5. Glass composition according to any one of the preceding claims, in which $z_1$ is greater than $z_2$.

6. Glass composition according to Claim 5, having at least one of the following features:

   - the ratio $\frac{(z_2 + z_3)}{(z_1 + z_2 + z_3)}$ is less than 0.1;
   - $z_3$ is equal to zero;
   - $z_2$ is equal to zero;
   - $z_1$ is a number which may vary from 50 to 75;
   - p is at least equal to 7, or at least equal to 8, or at least equal to 10.

7. Glass composition according to any one of Claims 1 to 4, in which $z_2$ is greater than $z_1$.

8. Glass composition according to Claim 7, having at least one of the following features:

   - the ratio $\frac{(z_1 + z_3)}{(z_1 + z_2 + z_3)}$ is less than 0.1;
   - $z_3$ is equal to zero;
   - $z_1$ is equal to zero;
   - $z_2$ is a number which may vary from 45 to 80.

9. Glass composition according to any one of the preceding claims, which contains no indium and/or contains no arsenic.

10. Glass composition as defined in any one of the preceding claims, in which the said composition is in the form of an optical fibre, a laser rod, an optical lens or an optical port or window.

EP 1 034 145 B1

**Patentansprüche**

1.  Glaszusammensetzung auf Chalcogenidbasis enthaltend in Mol %:

| | |
|---|---|
| Ga (+ ggf. In) | m |
| Ge | n |
| Sb (+ ggf. As) | p |
| S | $z_1$ |
| Se | $z_2$ |
| Te | $z_3$ |
| MX | r |
| Ln | s |
| Hilfsmittel | T |

Wobei:

M mindestens ein Alkalimetall aus Rb und Cs bedeutet,

Ln eine seltene Erde bedeutet,

X mindestens ein Halogen bedeutet,

die Hilfsmittel Zusatzstoffe aus Metallen oder Metallsalzen sind,

m eine Zahl von 1 bis 15 ist,

n eine Zahl von 5 bis 35 ist,

p eine Zahl von x bis 25 ist,

$z_1$, $z_2$ und $z_3$ Zahlen sind, die Null sein können, wobei ihre Summe ($z_1+z_2+z_3$) von 45 bis 80 variieren kann,

mindestens eine der Zahlen $z_1$ und $z_2$ ist ungleich Null,

r eine Zahl ist, die Null sein kann und höchstens gleich 20 ist,

s eine Zahl ist, die Null sein kann und höchstens gleich 5 ist,

t eine Zahl ist, die Null sein kann und höchstens gleich 5 ist und die die Molprozente der Metalle oder Metallsalze in den genannten Hilfsmitteln ausmacht,

wenn $z_1 > z_2$, dann x = 5 und $\dfrac{(z_2 + z_3)}{(z_1 + z_2 + z_3)} < 0{,}2$,

wenn $z_2 > z_1$, dann x = 3 und $\dfrac{(z_1 + z_3)}{(z_1 + z_2 + z_3)} < 0{,}2$,

$z_3$ bedeutet 0 oder eine Zahl, so dass $\dfrac{z_3}{(z_1 + z_2 + z_3)} < 0{,}2$,

und die Summe von ($m+n+p+z_1+z_2+z_3+r+s+t$) gleich 100 ist.

2.  Glaszusammensetzung gemäß Patentanspruch 1, bei dem die Hilfsstoffe mindestens ein Metall aus der Gruppe K, Ba, Ca, Sr, Bi, Zn und Mo enthalten.

3.  Glaszusammensetzung gemäß einem der vorangegangenen Ansprüche, bei dem Ln aus mindestens einer der folgenden Seltenen Erden ausgewählt wird: Dy, Er, Nd, Pr, Yb, Tm und Ho.

4.  Glaszusammensetzung gemäß einem der vorangegangenen Ansprüche, die mindestens eine der folgenden Ei-

9

genschaften aufweist:

- sofern In vorhanden ist, ist das Molverhältnis In/Ga+In kleiner 0,5 oder kleiner 0,1;
- sofern As vorhanden ist, ist das Molverhältnis As/Sb+As kleiner 0,5 oder kleiner 0,1:
- sofern Te vorhanden ist, ist das Verhältnis $z_3 / z_1 + z_2$ kleiner 0,1;
- r ist ungleich Null;
- r ist höchstens gleich 10;
- t ist kleiner 3;
- t ist gleich Null.

5. Glaszusammensetzung gemäß einem der vorangegangenen Ansprüche, wobei $z_1$ größer $z_2$ ist.

6. Glaszusammensetzung gemäß Anspruch 5, die mindestens eine der folgenden Eigenschaften aufweist:

- das Verhältnis $\dfrac{(z_2 + z_3)}{(z_1 + z_2 + z_3)}$ ist kleiner 0,1;
- $z_3$ ist gleich Null;
- $z_2$ ist gleich Null;
- $z_1$ ist eine Zahl zwischen 50 und 75;
- p ist mindestens gleich 7 oder mindestens gleich 8 oder mindestens gleich 10.

7. Glaszusammensetzung gemäß einem der Ansprüche 1 bis 4, bei dem $z_2$ größer $z_1$ ist.

8. Glaszusammensetzung gemäß Anspruch 7, die mindestens eine der folgenden Merkmale aufweist:

- das Verhältnis $\dfrac{(z_1 + z_3)}{(z_1 + z_2 + z_3)}$ ist kleiner 0,1;
- $z_3$ ist gleich Null;
- $z_1$ ist gleich Null;
- $z_2$ ist ein Zahl, die zwischen 45 und 80 variieren kann.

9. Glaszusammensetzung gemäß einem der vorangegangenen Ansprüche, die indiumund/oder arsenfrei ist.

10. Glaszusammensetzung, wie sie in einem der vorangegangen Ansprüche definiert wurde, bei der sich die genannte Zusammensetzung in Gestalt von optischen Fasern, als Laserstab, als optische Linse oder Fenster oder als optisches Fenster darstellt.